# EUROPEAN PATENT SPECIFICATION

(11) **EP 3 378 887 B1**
(45) Date of publication and mention of the grant of the patent: **08.05.2024**
(21) Application number: 16866233.6
(22) Date of filing: 10.11.2016
(51) Int. Cl.: C08J 5/04, C08L 75/16, C08G 18/32, C08G 18/24, C08G 18/08, C08G 18/02, C08G 18/79, C08G 18/75, C08G 18/67, C08F 290/06, B29C 70/06, C08F 283/00, C08F 299/06, B29K 307/04, B29K 75/00

(54) **FIBER-REINFORCED-PLASTIC MOLDED ARTICLE AND PRODUCTION PROCESS THEREFOR**
FORMARTIKEL MIT FASERVERSTÄRKTEM KUNSTSTOFF UND HERSTELLUNGSVERFAHREN DAFÜR
ARTICLE MOULÉ EN MATIÈRE PLASTIQUE RENFORCÉE PAR DES FIBRES ET PROCÉDÉ DE PRODUCTION ASSOCIÉ

(30) Priority: 16.11.2015 JP 2015224267
(43) Date of publication of application: 26.09.2018
(73) Proprietor: Japan U-PICA Company, Ltd, Chiyoda-ku Tokyo 102-0094 (JP)
(72) Inventor: MOROIWA, Tetsuji, Hiratsuka-city Kanagawa 254-0016 (JP); ISHINE, Nozomi, Hiratsuka-city Kanagawa 254-0016 (JP)
(74) Representative: Studio Torta S.p.A.
(86) International application number: PCT/JP2016/083383
(87) International publication number: WO 2017/086231

(56) References cited:
- WO-A1-2006/096060
- WO-A1-2008/139602
- WO-A1-2013/069441
- WO-A1-2013/084967
- WO-A1-2014/119234
- WO-A1-2014/119234
- JP-A- 2002 322 233
- JP-A- 2004 099 770
- JP-A- 2016 029 133
- JP-A- 2016 029 133
- JP-A- 2017 043 732
- US-A- 5 189 093

## Description

### Technical Field

The present invention relates to a fiber reinforced plastic molded article and a method of manufacturing the fiber reinforced plastic molded article. Particularly, the present invention relates to a fiber reinforced plastic molded article having superior mechanical strength and a method of manufacturing the fiber reinforced plastic molded article.

### Background Art

Fiber reinforced plastics (FRP) are utilized in various fields, because they are lightweight, have high strength, and have long lifetimes. Particularly, carbon fiber reinforced plastics (Carbon FRP: CFRP) are utilized in many fields such as aircraft and automobile parts, concrete reinforcing members, and sports equipment, because they are lightweight and have high strength.

Production methods for CFRP include autoclave molding, in which sheets which are impregnated with epoxy resin in advance are laminated, packed, and then molded in an autoclave by applying temperature and pressure, press molding that utilizes prepreg sheets, and FW (Filament Winding) molding that performs molding by winding while impregnating a temperature controlled resin. Autoclave molding is capable of obtaining parts having complex shapes, because pressure is applied in a uniform manner. However, there are problems associated with autoclave molding, such as long curing times and the necessity of utilizing an autoclave and specialized sub materials, and improvements are necessary. It is difficult for press molding to be applied to production of small lots, because press molding requires dies. The shapes which can be obtained by FW molding are limited.

In order to solve these problems, RTM (Resin Transfer Molding) and VaRTM (Vacuum assisted Resin Transfer Molding), that place a dry preform of carbon fibers in a die and utilizes epoxy resin, have been developed recently. However, problems still remain, such as that it is necessary to heat resin during injection, curing times are long, curing is performed at a high temperature, the lifetimes of molding dies are short, and voids remain in molded articles.

An unsaturated polyester resin, which has been utilized in glass fiber reinforced plastics, having a short molding time, superior workability, and superior curing properties may be applied as a matrix for CFRP. In this case, molding properties are favorable, but sufficient mechanical properties cannot be obtained.

It has been conventionally known that urethane (meth) acrylate compounds have superior bonding properties with respect to carbon fibers, and such compounds are employed as sizing agents for carbon fibers (Patent literature 1, for example). In addition, because urethane (meth) acrylate compounds have favorable bonding properties with respect to carbon fibers, mixing such compounds with resins having poor bonding properties with respect to reinforcing fibers has been proposed (Patent literature 2, for example). Urethane (meth) acrylate compounds are also known from JP 2016/029133, WO2014/119234, US5189093 and WO2006/096060.

### Prior art literature

### Patent literatures

Patent literature 1
   Japanese Unexamined Patent Publication No. H11-200252
Patent literature 2
   Japanese Unexamined Patent Publication No. S62-292839

### Disclosure of the Invention

### Problems to be resolved by the invention

However, the urethane (meth) acrylate compounds disclosed in Patent Literatures 1 and 2 cannot obtain sufficient mechanical properties when it is employed as a composite material with the use of a reinforced fiber. Therefore, there is a problem that a molded product having practical mechanical strength cannot be obtained.

Therefore, the object of the present invention is to provide a fiber reinforced plastic molded article having favorable close contact properties with reinforcing fibers and superior mechanical strength.

### Means of solving the problems

In view of the above object, the present inventors conducted focused research. As a result of this, it was discovered that a reinforced plastic molded article having favorable close contact properties with reinforcing fibers and superior mechanical strength may be obtained by molding and curing a fiber reinforced plastic molding material comprising a radical polymerizable resin composition made up of a urethane (meth) acrylate resin component that contains a urethane (meth) acrylate compounds containing a free isocyanate group and an ethylene unsaturated group, and an organic tin component which are mixed prior to curing, and reinforcing fibers, to achieve the present invention. In addition, it was discovered that the obtained fiber reinforced plastic molded article is useful as a structural member, a non structural member, an exterior member, an interior member, or parts thereof, in various applications.

That is, a fiber reinforced plastic molded article according to the present invention, is characterized by a fiber reinforced plastic molded article being obtained by molding a fiber reinforced plastic molding material comprising a radical polymerizable resin composition and reinforcing fibers, wherein the radical polymerizable resin composition contains at least a urethane (meth) acrylate resin component (a) containing a urethane (meth) acrylate resin compound represented by the following chemical formula [Chemical 1]: 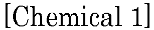 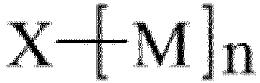 (in the formula, wherein n is within a range from 2 to 100, X is a compound residue having two or more isocyanate groups, and M contains at least formula [Chemical 2]:

[Chemical 2] -N=C=O

and M other than the above formula [Chemical 2] is a formula [Chemical 3]: 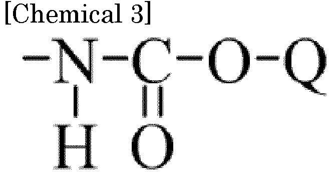
in the formula [Chemical 3], Q represents a residue of a hydroxyl group containing (meth)acrylate esters wherein the component (a) contains 0.1 to 12 percent by weight of isocyanate groups,
wherein the urethane (meth) acrylate compound is synthesized in the presence of a tin compound catalyst and the amount of the tin compound catalyst is 5 to 100 ppm with respect to the loading weight,
and an organic tin compound component (b);
   and the component (a) and the component (b) are mixed prior to curing.

Furthermore, in a preferred embodiment of the fiber reinforced plastic molded article according to the present invention, the molded article is characterized in that the chemical formula [Chemical 1] is represented by the following chemical formula [Chemical 4]: 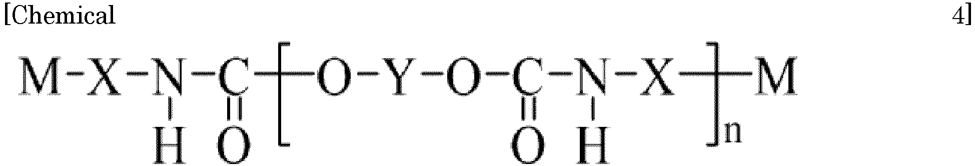 (in the formula, wherein n is within a range from 1 to 5000, X is a compound residue having two or more isocyanate groups, Y is an alcohol compound residue having two or more hydroxyl groups and M contains at least formula [Chemical 5]:

[Chemical 5] -N=C=O

and the M other than the above formula [Chemical 5] is formula [Chemical 6]: 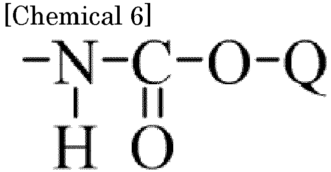 Moreover, in the formula [Chemical 6], Q represents a residue of a hydroxyl group containing (meth)acrylate esters.

Furthermore, in a preferred embodiment of the fiber reinforced plastic molded article according to the present invention, the molded article is characterized in that the reinforcing fibers are one or more selected from a group consisting of carbon fibers, glass fibers, basalt fibers, aramid fibers, polyarylate fibers, and cellulose fibers.

Furthermore, in a preferred embodiment of the fiber reinforced plastic molded article according to the present invention, the molded article is characterized in that the fiber reinforced plastic molded article is utilized as structural members, non structural members, external members, internal members, or parts thereof in the fields of aviation and aerospace, the fields of sports and daily consumer goods, and the industrial field.

Furthermore, a method of manufacturing a fiber reinforced plastic molded article according to the present invention is characterized by comprising a step of mixing a urethane (meth) acrylate resin component (a) containing at least a urethane (meth) acrylate compound represented by the following chemical formula [Chemical 7]: 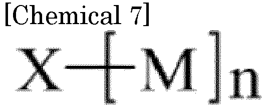 (in the formula, wherein n is within a range from 2 to 100, X is a compound residue having two or more isocyanate groups, and M at least contains formula [Chemical 8]:

[Chemical 8] -N=C=O

and M other than the above formula [Chemical 8] is formula [Chemical 9]:

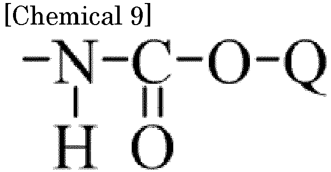

Further, in the formula [Chemical 9], Q represents residue of a hydroxyl group containing (meth)acrylate esters; wherein the component (a) contains 0.1 to 12 percent by weight of isocyanate groups, wherein the urethane (meth) acrylate compound is synthesized under the tin compound catalyst, and the amount of the tin compound catalyst is 5 to 100 ppm with respect to the loading weight, and an organic tin compound component (b), prior to the radical polymerizable resin composition at least containing the component (a) and the component (b) being cured, wherein room temperature curing and post-curing are conducted as curing.

Furthermore, in a preferred embodiment of the method of manufacturing a fiber reinforced plastic molded article according to the present invention, the method is characterized in that the time prior to the radical polymerizable resin composition being cured is a period of time from six hours before curing is initiated to a time when curing is initiated.

Furthermore, a kit for a fiber reinforced plastic molded article according to the present invention, the kit is characterized by being obtained by molding a fiber reinforced plastic molding material comprising a radical polymerizable resin composition and reinforcing fibers, wherein the radical polymerizable resin composition contains at least a urethane (meth) acrylate resin component (a) containing a urethane (meth) acrylate compound represented by the following chemical formula [Chemical 10]: 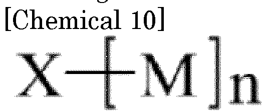 (in the formula, wherein n is within a range from 2 to 100, X is a compound residue having two or more isocyanate groups, and M at least contains formula [Chemical 11]:

[Chemical 11] -N=C=0

and M other than the above formula [Chemical 11] is formula [Chemical 12]:

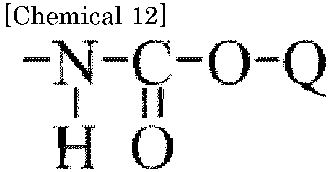

Moreover, in the formula [Chemical 12], Q represents a residue of a hydroxyl group containing (meth)acrylate esters; wherein the component (a) contains 0.1 to 12 percent by weight of isocyanate groups,
wherein the urethane (meth) acrylate compound is synthesized under the tin compound catalyst, and the amount of the tin compound catalyst is 5 to 100 ppm with respect to the loading weight, and an organic tin compound component (b), and the kit contains at least the component (a) and the component (b). Moreover, although in the present invention, the kit is for a fiber reinforced plastic molded article kit, the kit may also be marketed as a kit for a composition other than the kit for molded article, that is, a kit for a radical polymerizable rein composition containing at least the urethane (meth) acrylate resin component (a) and the organic tin compound component (b).

Furthermore, in a preferred embodiment of the kit for a fiber reinforced plastic molded article according to the present invention, the kit is characterized by further containing a curing agent and / or reinforcing fibers.

### Effect of Invention

The fiber reinforced plastic molded article of the present invention has an advantage effect that since it has a favorable close contact property with reinforcing fibers and has a superior mechanical strength, it is possible to attain such as applications to uses for which conventional fiber reinforced plastics were not utilizable due to insufficient performance, as well as realization of further thinning of walls and weight reduction for uses in which conventional fiber reinforced plastics had been utilized.

### Brief Description of the Drawings

[Figure 1]

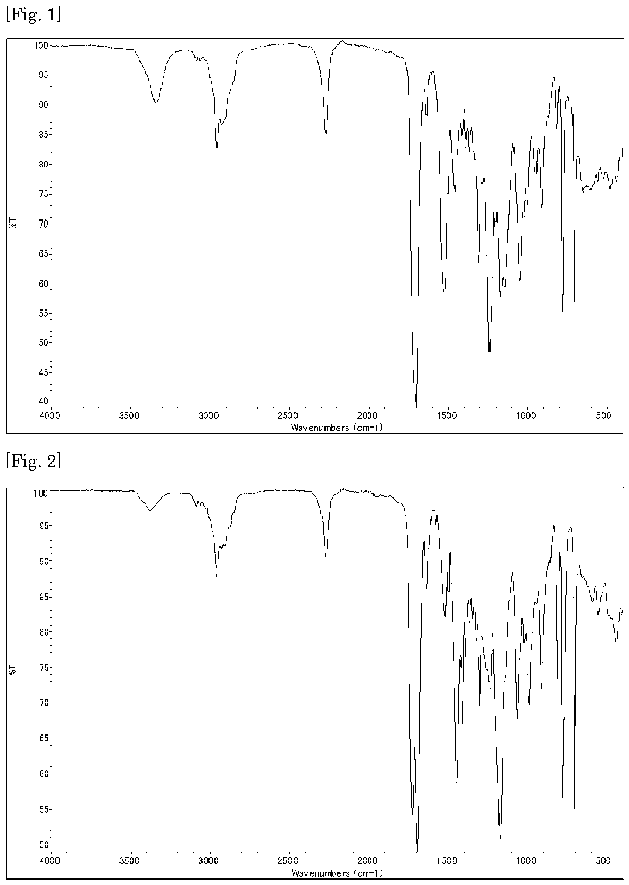

   Figure 1 illustrates an IR spectrum of a urethane (meth) acrylate compound having isocyanate groups and ethylene unsaturated groups (Those of synthesis example 1 in the Example as described later), in which absorption by the isocyanate groups can be confirmed in the vicinity of 2250 cm⁻¹.
[Figure 2]
   Figure 2 illustrates an IR spectrum of a urethane (meth) acrylate compound having isocyanate groups and ethylene unsaturated groups (Those of synthesis example 1 in the Example as described later), in which absorption by the isocyanate groups can be confirmed in the vicinity of 2250 cm⁻¹.

### Mode for Carrying Out the Invention

Hereinafter, embodiments of the present invention will be described in detail. In addition, in the present invention, "(meth) acrylate" refers to "acrylate" and "methacrylate". Similarly, (meth) acrylic acid ester refers to "acrylic acid ester" and "methacrylic acid ester".

### <Urethane (Meth) Acrylate Resin Component (a)>

At first, a urethane (meth) acrylate resin component (a) (hereinafter, "component (a)") which is utilizable in a radical polymerizable resin composition, a kit for a radical polymerizable resin composition, and a kit for fiber reinforced plastic molded article of the present invention will be described.

Component (a) contains at least a urethane (meth) acrylate compound represented by the following chemical formula [Chemical 10]:

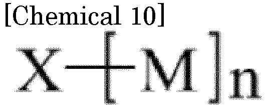

In [Chemical 10], n is within a range from 2 to 100, X is a compound residue having two or more isocyanate groups, and M at least contains formula [Chemical 11]:

[Chemical 11] -N=C=0

and M other than the above formula [Chemical 11] is formula [Chemical 12]:

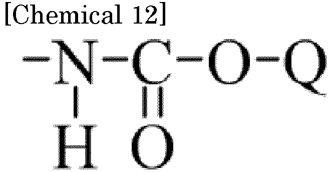

Moreover, in formula [Chemical 12], Q represents residue of a hydroxyl group containing (meth)acrylate esters.

As another aspect, compound (a) contains at least a urethane (meth) acrylate compound represented by the following chemical formula [Chemical 13].

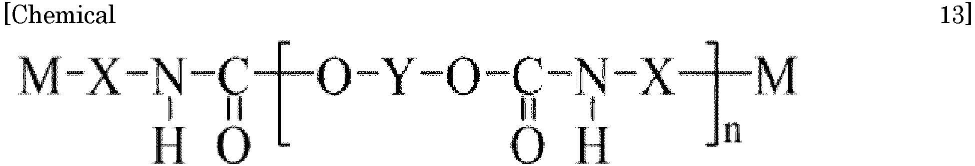

In [Chemical 13], n is within a range from 1 to 5000, X is a compound residue having two or more isocyanate groups, Y is an alcohol compound residue having two or more hydroxyl groups and M at least contains formula [Chemical 14]:

[Chemical 14] -N=C=O

and M other than the above formula [Chemical 14] is formula [Chemical 15]:

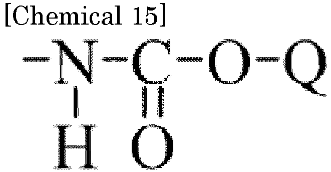

Moreover, in formula [Chemical 15], Q represents a mono alcohol compound residue containing ethylene unsaturated groups.

In the present invention, the compound expressed by the above mentioned [Chemical 10] may be obtained by reacting a compound having two or more isocyanate groups with a monoalcohol compound containing ethylene unsaturated groups.

Moreover, the compound expressed by the above mentioned [Chemical 13] may be obtained by reacting a compound having two or more isocyanate groups, a monoalcohol compound containing thylene unsaturated groups, and an alcohol compound having two or more hydroxyl groups.

During synthesis of the compounds expressed by [Chemical 10] and [Chemical 13], the molar number of the isocyanate groups derived from the isocyanate compound is set to be greater than the total molar number of the hydroxyl groups derived from the monoalcohol compound containing ethylene unsaturated groups, and the alcohol compound having two or more hydroxyl groups.

With respect to the synthesis reaction temperature, from the viewpoint of preventing gelation during synthesis by the ethylene unsaturated groups, it is preferable for the reactions to be conducted in a temperature range from 40°C to 140°C, and more preferably a temperature range from 70°C to 110°C.

The amount of time required for the synthesis reactions is preferably until the amount of residual isocyanate groups becomes constant, that is, until the hydroxyl groups are consumed. The endpoints of the reactions may be confirmed by quantifying the isocyanate groups by titration or by tracking the absorption of the isocyanate groups (in the vicinity of 2250 cm⁻¹) within an infrared (hereinafter, abbreviated as IR) absorption spectrum.

During the reactions, it is possible to conduct synthesis in a system to which a polymerizable monomer that does not react with isocyanate groups is added as necessary. Known catalysts and polymerization inhibitors may be employed.

An acidic catalyst or a basic catalyst may be utilized as the catalyst. Tin compounds such as dibutyl tin dilaurate and dibutyl tin diacetate having high activity are preferable. From the viewpoint of storage stability, the amount of the catalyst to be added may be within a range from 5 ppm to 100 ppm, and more preferably 5 ppm to 50 ppm with respect to the loading weight.

As the polymerization inhibitor, polyhydric phenol series polymerization inhibitors such as hydroquinone, p-benzoquinone, methylhydroquinone, and trimethyl hydroquinone, heterocyclic compounds such as phenothiazine, and nitroxyl radicals such as 2,2,6,6-tetramethylpiperidine 1-oxyl may be utilized. The amount of the polymerization inhibitor to be added is preferably within a range from 100 ppm to 2000 ppm with respect to the loading weight, from the viewpoint of preventing gelation during synthesis by ethylene unsaturated groups and polymerizable monomers.

The isocyanate groups are contained in the component (a) within a range from 0.1 percent by weight to 12 percent by weight, and more preferably within a range from 0.3 percent by weight to 12 percent by weight. If the isocyanate group content is less than 0.1 percent by weight, close contact properties with the carbon fibers will be inferior, and there is a possibility that sufficient compressive strength and interlayer shear strength will not be obtained. If the isocyanate group content is greater than 12 percent by weight, bending strength and tensile strength will decrease, and there is a possibility that mechanical properties will become unbalanced.

The amount of the ethylene unsaturated groups of the urethane (meth) acrylate compound contained in the component (a) is not particularly limited. However, if the amount is greater than 1500 g/eq, the balance of mechanical properties (bending strength, tensile strength, compressive strength, and interlayer shear strength) will become poor, and there is a possibility that the heat resistant properties of the molded article will be reduced.

The component (a) may also contain a polymerizable monomer that does not react with isocyanate groups at room temperature.

Examples of polymerizable monomers that do not react with isocyanate groups at room temperature may include a vinyl monomer, a monofunctional acrylic acid ester, and polyfunctional acrylic acid esters. If a polymerizable monomer that reacts with isocyanate groups is blended into the component (a), the polymerizable monomer and the isocyanate groups will react during storage and increase the viscosity. This will result in the possibility of workability deteriorating and sufficient mechanical properties not being obtained.

Examples of the vinyl monomer may include: styrene, vinyl toluene, alpha-methyl styrene, and vinyl acetate. Examples of the monofunctional acrylic acid esters may include: methyl methacrylate, benzyl (meth) acrylate, n-butyl (meth) acrylate, i-butyl (meth) acrylate, t-butyl (meth) acrylate, 2-ethylhexyl (meth) acrylate, tetrahydrofurfuryl (meth) acrylate, lauryl (meth) acrylate, tridecyl (meth) acrylate, stearyl (meth) acrylate, 2-methoxyethyl (meth) acrylate, 2-ethoxyethyl (meth) acrylate, cyclohexyl (meth) acrylate, isobornyl (meth) acrylate, norbornyl (meth) acrylate, dicyclopentenyl (meth) acrylate, and dicyclopentenyl oxyethyl (meth) acrylate. Examples of the polyfunctional acrylate esters may include ethylene glycol di (meth) acrylate, 1,3-propanediol di (meth) acrylate, 1,4-butanediol di (meth) acrylate, neopentyl glycol di (meth) acrylate, diethylene glycol di (meth) acrylate, tripropylene di (meth) acrylate, norbornene dimethanol di (meth) acrylate, tricyclodecane dimethanol (meth) acrylate, propylene oxide-added bisphenol A di (meth) acrylate, trimethylolpropane tri (meth) acrylate, and tris (2-(meth) acryloyloxyethyl) isocyanurate.

These polymerizable monomers may be used alone or may be used in combinations of two or more. Application of styrene, methyl methacrylate, and benzyl methacrylate is preferred, from the points of dilution performance and mechanical properties.

### <Isocyanate Compound>

Examples of the isocyanate compound having two or more isocyanate groups may include aromatic isocyanate compounds such as 1,3-xylylene diisocyanate, 2,4-tolylene diisocyanate, 2,6-tolylene diisocyanate, 4,4'-diphenyl diisocyanate, 1,5 naphthalene diisocyanate, 4,4'-diphenylmethane diisocyanate, polymethylene polyphenyl polyisocyanate, and m- tetramethyl xylene diisocyanate, alicyclic isocyanate compounds such as hydrogenated xylylene diisocyanate (1,3-bis (isocyanatomethyl) cyclohexane), isophorone diisocyanate, norbornene diisocyanate, dicyclohexylmethane diisocyanate, hydrogenated methylene bis-phenylene diisocyanate, 1,4-cyclohexane diisocyanate, aliphatic isocyanate compounds such as 1,6-hexamethylene diisocyanate and trimethylene diisocyanate, trifunctional isocyanate in which bifunctional isocyanate compounds have trimer isocyanurate rings, and isocyanate prepolymers modified with a commercially available polyol.

These isocyanate compounds may be used alone or may be used in combinations of two or more. Alicyclic isocyanate compounds are preferable from the viewpoints of heat resistance, weather resistance, and storage stability.

### <Alcohol compound>

Examples of the alcohol compound having two or more hydroxyl groups may include aliphatic alcohols, etherified diphenols, and polyester polyols.

Examples of chain aliphatic alcohols may include ethylene glycol, 1,2-propanediol, 1,3-propanediol, 1,2-butanediol, 1,3-butanediol, 1,4-butanediol, 2, 3-butanediol, 1,4-butenediol, 2-methyl-1,3-propanediol, 1,5-pentanediol, neopentyl glycol, 2-ethyl-2-methylpropan-1,3-diol, 2-butyl-2-ethylpropan-1,3-diol, 1,6-hexanediol, 3-methyl-1,5-pentanediol, 2-ethyl-1,3-hexanediol, 2,4-dimethyl-1, 5-pentanediol, 2,2,4-trimethyl-1,3-pentanediol, 1,7 - heptane diol, 1,8-octane diol, 1,9-nonanediol, 1,10-decanediol, diethylene glycol, triethylene glycol, dipropylene glycol, polypropylene glycol, and polyethylene glycol. Examples of cyclic aliphatic alcohols may include hydrogenated bisphenol A, tricyclodecanedimethanol, and spiro glycol. Among these, utilization of 1,3-propanediol, 1,4-butanediol, 1,5-pentanediol, and 1,6-hexanediol is preferred from the viewpoints of resin viscosity and the mechanical properties of a cured product.

Examples of etherified diphenols may include diols which are obtained by an addition reaction of bisphenol A with alkylene oxide, and diols which are obtained by bromination of bisphenol A and additives of alkylene oxide. It is preferable for the alkylene oxide to be ethylene oxide or propylene oxide, and for the average added molar number of the alkylene oxide to be within a range from 2 to 16 moles with respect to 1 mole of bisphenol A, from the viewpoint of balanced mechanical properties.

Examples of the polyester polyol may include those obtained by polycondensing unsaturated and / or saturated acids, the aforementioned fatty alcohols, and etherified diphenol. Examples of the unsaturated acids may include maleic anhydride, maleic acid, and fumaric acid. Examples of the saturated acid may include phthalic acid, terephthalic acid, isophthalic acid, 1,4-cyclohexanedicarboxylic acid, adipic acid, succinic acid, sebacic acid, alkyl succinic acids, alkenyl succinic acid, itaconic acid, biphenyl dicarboxylic acid, naphthalene dicarboxylic acid, 5-tert-butyl-1,3-benzenedicarboxylic acid and acid anhydrides thereof, and ester-forming derivatives such as lower alkyl esters and acid halides. From the viewpoints of resin viscosity and the mechanical properties of the cured product, a polyester polyol obtained by polycondensing one or more selected from terephthalic acid, isophthalic acid, and ester-forming derivatives thereof with one or more selected from 1,3-propanediol, 1,4-butanediol, 1,5 pentanediol, and 1,6-hexanediol is particularly preferred.

These alcohol compounds may be used alone or in combinations of two or more. Further, trivalent or higher polyols may be used within a range that does not negatively affect the effects of the present invention. Examples of the trivalent or higher polyols may include glycerin, trimethylol ethane, trimethylol propane, and pentaerythritol. These may be used alone or in combinations of two or more.

### <Monoalcohol Compound containing Ethylene Unsaturated Group>

The monoalcohol compound containing an ethylene unsaturated group refers to a hydroxyl group containing (meth) acrylate ester. Examples of hydroxyl group containing (meth) acrylate esters may include 2-hydroxyethyl (meth) acrylate, 3-hydroxypropyl (meth) acrylate, 4-hydroxybutyl (meth) acrylate, polyethylene glycol mono (meth) acrylate, polypropylene glycol mono (meth) acrylate, trimethylolpropane di (meth) acrylate, pentaerythritol tri (meth) acrylate, dipentaerythritol penta (meth) acrylate, and diacrylated isocyanurate.

The monoalcohol compound containing an ethylene unsaturated group may be used alone or in combinations of two or more. Moreover, among these monoalcohol compounds containing an ethylene unsaturated group, 2-hydroxyethyl (meth) acrylate is preferable from the viewpoint of resin viscosity and the mechanical properties of the cured product.

### <Organic Tin Compound Component (b)>

Next, an organic tin compound (b) which is utilizable in the radical polymerizable resin composition capable of using in the present invention, the kit for the radical polymerizable resin composition, and the kit for the fiber reinforced plastic molded article of the present invention will be described. In the present invention, the components (a) and (b) may be mixed from a time prior to curing through a time of curing. Here, the time of curing refers to a point of time that curing of the resin composition is initiated on a job site. The point of time that curing is initiated refers to a point in time when a curing agent is added in the case of cold curing or hot curing, and refers to a point in time when a photopolymerization initiating agent is added in the case of photocuring.

The time at which the component (b) is added to the radical polymerizable resin composition that contains the component (a) is most preferably immediately prior to the time that curing is initiated. However, it is preferable for the component (b) to be added 30 minutes prior to the time that curing is initiated in the case that temperature control is conducted. In the case that it is difficult for the component (b) to be added immediately prior to the time that curing is initiated, the component (b) may be added 12 hours prior to the time that curing is initiated, and preferably from a time six hours prior to the time that curing is initiated up to the time that curing is initiated. There is a possibility that gelation time will be shortened in the case that the component (b) is added at a point in time before 12 hours prior to the time when curing is initiated.

The amount of the component (b) which is added is preferably 15 ppm or greater, more preferably 30 ppm or greater as tin, based on the total weight of the radical polymerizable resin composition. Close contact properties with fibers will be poor if the amount of the component (b) is less than 15 ppm.

Specific examples of the component (b) may include dibutyl tin dilaurate, dibutyl tin diacetate, dibutyl tin sulfide, and stannous octoate. However, the component (b) is not limited to these.

### <Curing of Radical Polymerizable Resin Composition and Molding of Fiber Reinforced Plastic>

Curing of the radical polymerizable resin composition which is used by the present invention as well as molding of fiber reinforced plastic that utilizes the radical polymerizable resin composition will be described.

The characteristic feature of the present invention is that the urethane (meth) acrylate resin component (a) and the organic tin compound component (b) are mixed during curing, preferably, between a point in time prior to curing through the time when curing is initiated. The time of curing refers to the point in time at which curing of the resin composition is initiated on job site, as described above.

The method of mixing the component (b) is not limited, as long as it is mixed into the component (a) at the time of curing. For example, the aforementioned polymerizable monomer or a curing promoting agent (accelerator) to be described later may be added in advance to form a liquid preparation, and the component (a) and the liquid preparation containing the component (b) may be mixed at the time of curing.

The radical polymerizable resin composition which is used in the present invention is favorable as a matrix resin for fiber-reinforced plastic.

It is preferable for the viscosity of the radical polymerizable resin composition which is used in the present invention during molding of fiber reinforced plastics to be within a range from 30 mPa·s to 70 mPa·s (at 25°C) so as to be applicable to hand layup molding, RTM (Resin Transfer Molding) or VaRTM (Vacuum assisted Resin Transfer Molding). There is a possibility that resin will be lacking during impregnation into fibers in the case that the viscosity is less than 30 mPa·s, and there is a possibility that unimpregnated portions will remain in the case that the viscosity is greater than 700 mPa·s. However, it shall not be applied in case that the resin viscosity is intentionally caused to be lower or higher by utilizing temperature control equipment.

On the other hand, in the case of FW molding, pultrusion molding which is conducted at high temperature, and press molding, it is preferable for the viscosity of the radical polymerizable resin composition which is used in the present invention to be within a range from 300 mPa·s to 1200 mPa·s (at 25°C). Viscosity decreases at high temperature, and therefore lacking of resin will occur at viscosities of less than 300 mPa·s, and flow failure will occur at viscosities exceeding 1500 mPa·s.

Curing conditions which are the same as those of known methods for curing conventional radical polymerizable resins may be applied at the time of molding. Specific examples of known curing methods may include curing using organic peroxides, UV curing, and electron beam curing. Moreover, an accelerator, a polymerization inhibitor may be added to adjust the curing rate, and a wax may be added to impart air drying properties in the same manner as conventional radical curing resins.

Examples of organic peroxide series curing agents may include ketone peroxides series such as methyl ethyl ketone peroxide and acetyl acetone peroxide, diacyl peroxides series such as benzoyl peroxide, peroxy esters series such as t-butyl peroxybenzoate, hydroperoxides series such as cumene hydroperoxide, and dialkyl peroxides series such as dicumyl peroxide. The amount of the curing agent to be added may be within a range from 0.05 parts by weight to 5 parts by weight based on 100 parts by weight of the radical polymerizable resin composition, from the viewpoints of maintaining the mechanical properties of the cured product and securing an appropriate amount of working time.

Examples of ultraviolet initiators may include benzophenones series such as benzophenone, benzyl, and methyl orthobenzoyl benzoate, benzoin ethers series such as benzoin alkyl ether, acetophenones series such as benzyl dimethyl ketal, 2,2-diethoxyacetophenone, 2-hydroxy-2-methyl propiophenone, 4-isopropyl-2-hydroxy-2-methyl propiophenone, and 1,1-dichloro-acetophenone, and thioxanthones series such as 2-chlorothioxanthone, 2-methyl thioxanthone, and 2-isopropyl thioxanthone. The amount of the ultraviolet initiator to be added may be within a range from 0.1 parts by weight to 5 parts by weight based on 100 parts by weight of the radical polymerizable resin composition, from the viewpoints of maintaining curing properties and mechanical properties.

Examples of curing accelerators may include metallic soaps such as cobalt naphthenate, cobalt octylate, zinc octylate, octoate vanadium, copper naphthenate, and barium naphthenate, metal chelates such as vanadium acetyl acetonate, cobalt acetyl acetonate, and iron acetyl acetonate, and tertiary amines such as N, N-dimethylaniline, N, N-diethylaniline, N, N-dimethyl-p-toluidine, 4-(N, N-dimethylamino) benzaldehyde, pyridine, and phenylene morpholine. The amount of the curing accelerator to be added is within a range from 0.05 parts by weight to 5 parts by weight based on 100 parts by weight of the radical polymerizable resin composition, from the viewpoints of maintaining curing properties and mechanical properties.

During molding, other radical polymerizable resins may be blended and utilized according to the intended purpose. Other resins which may be utilized can include unsaturated polyester resins, epoxy (meth) acrylate resins, and urethane (meth) acrylate resins. In each case, it is preferable for the isocyanate groups within the blended resin to be within a range from 0.1 percent by weight to 8 percent by weight, from the viewpoint of close contact properties with fibers, particularly carbon fibers. Moreover, in the case that an unsaturated polyester resin or an epoxy (meth) acrylate resin having hydroxyl groups or carboxyl groups is blended, it is preferable for such resins to be mixed immediately prior to molding, from the viewpoint of storage stability.

Examples of reinforcing fibers which are used during molding may include carbon fibers, glass fibers, aramid fibers, Zylon fibers, vinylon fibers, polyethylene fibers, boron fibers, basalt fibers, and cellulose fibers, but the reinforcing fibers are not limited to these fibers. The reinforcing fibers are preferably one or more selected from among carbon fibers, glass fibers, basalt fibers, aramid fibers, polyarylate fibers, and cellulose fibers. Carbon fibers are particularly preferable due to a balance of mechanical properties and light weight of molded articles. In addition, it is desirable for the rate of the reinforcing fiber content to be within a range from 10 percent by weight to 90 percent by weight, and preferably a range from 20 percent by weight to 70 percent by weight, from the viewpoints of mechanical properties and moldability. A surface treatment agent for the reinforcing fibers is not limited.

There reinforcing fiber are used as twisted fibers, spun fibers, spin processed fibers, and non woven processed fibers according to the molding method and the intended use. Specifically, it is possible to use fibers in forms such as filament, yarn, roving, strand, chopped strand, felt, needle punch, cross, roving cloth, and milled fiber.

When producing a fiber reinforced plastic material that utilizes two or more types of different reinforcing fibers, the respective fibers may be stacked in an arbitrary order and utilized, or each blended fiber may be utilized. By utilizing carbon fibers and reinforcing fibers other than carbon fibers, a problem of carbon fiber reinforced plastic, such as fragments scattering on impact, can be solved.

Conventionally known methods for producing and molding fiber reinforced plastic molding materials may be applied as a method for producing and a method for molding the fiber reinforced plastic molding material in order to obtain the fiber reinforced plastic molded article of the present invention. Methods for molding fiber reinforced plastic molding materials include hand layup molding, sheet winding molding, press molding, filament winding molding, pultrusion molding, RTM (Resin Transfer Molding), VaRTM (Vacuum assisted Resin Transfer Molding), and injection molding.

In hand layup molding, filament winding molding, pultrusion molding, RTM, and VaRTM, resin in liquid form is impregnated into reinforcing fiber and cured during molding to obtain a molded article. In contrast, in sheet winding molding and press molding, resin in liquid form is impregnated into reinforcing fibers in advance, a preform material in sheet form (prepreg) having a tack free surface is obtained by removing solvent or partial curing. After that, to obtain a molded article, the prepreg is wound about a mandrel, and cured within a heating furnace (sheet winding molding), or prepregs are stacked in an upper and lower die and cured by applying pressure and heat (press molding).

The fiber reinforced plastic molded article of the present invention has superior mechanical performance. Therefore, significant advantageous effects are exhibited, applications to uses for which conventional fiber reinforced plastics were not utilizable due to insufficient performance become possible, as well as realization of thinning of walls and weight reduction for uses in which conventional fiber reinforced plastics had been utilized.

The fiber reinforced plastic molded article of the present invention may be utilized as structural members, non structural members, exterior members, interior members, and portions thereof in the aviation and aerospace field, the sports and daily consumer goods field, and the industrial field.

In the aviation and aerospace field, the molded article of the present invention may be applied as primary structural members such as a wing, a tail, a fuselage and floor beams, secondary structural members such as an aileron, a rudder, an elevator, and a fairing, interior members such as a floor panel, a lavatory, and a seat, as well as a jet engine fan blade, a helicopter rotor blade, etc. in relation with airplanes. The molded article of the present invention may be applied as a satellite fairing, an interstage portion, a motor case, a nozzle float, etc. in relation with rockets; as structural members such as an antenna, a solar panel, and a tube truss in relation with satellites; and as an antenna, a post, etc. in relation with radio telescopes.

In the field of sports, the molded article of the present invention may be applied as a fishing rod, a reel, etc. in relation with fishing goods; as a shaft, a club head, a face plate, etc. in relation with golf; as a tennis racket, a badminton racket, a squash racket, etc. in relation with rackets; as a frame, a wheel, a handlebar, a crank, etc. in relation with bicycles: as a yacht, a cruiser, a sport boat, a mast, etc. in relation with oceangoing vessels; and as a baseball bat, ski, a ski pole, a kendo practice sword, a Japanese bow, a western bow, a radio controlled car, a table tennis racket, a pool cue, etc. in relation with other sports.

In the field of daily consumer goods, the molded article of the present invention may be applied as nursing goods such as a wheelchair, a portable slope for a wheelchair, a prosthetic leg and a cane, electronic products such as a personal computer housing and an acoustic speaker, daily consumer goods such as an umbrella, a helmet, a bag, and furniture and so on.

In the industrial field, the molded article of the present invention may be applied as a body, a hood, a spoiler, a propeller shaft, etc. in relation with automobiles; as a racing cowl, a muffler cover, etc. in relation with motorcycles; as a bullet train nose portion▪car connector cover, a seat, etc. in relation with train cars and containers; as a plate spring, a robot arm, a printer roller, a centrifuge rotor, a flywheel, a shaft, etc. in relation with mechanical components; as a hydrogen tank, a CNG tank, a fire extinguisher tank, etc. in relation with pressure vessels; as a stirring blade, a pipe, a tank, etc. in relation with chemical apparatuses; as a top plate, a cassette, an X ray grid, etc. in relation with medical devices; as a concrete reinforcing material, a cable, a rod, a lightweight roofing material, etc. in relation with construction; as a home elevator, etc. in relation with home installations; and as a wind power blade, a platform for ocean floor oil drilling, etc. in relation with energy. These are a portion of the possible uses for the fiber reinforced plastic molded article of the present invention, and the present invention is not limited to these uses.

Moreover, the urethane (meth) acrylate (a) and the organic tin compound component (b) capable of being utilizable in the radical polymerizable resin composition used in the present invention, a kit for the radical polymerizable resin composition and a kit for the fiber reinforced plastic molded article of the present invention, for example, may be sold as a kit in the following manner.

For example, a kit for a radical polymerization resin composition or a kit for a fiber reinforced plastic molded article that includes 1) the urethane (meth) acrylate resin (a) as a resin, 2) a solution containing the organic tin compound component (b) as a promoting agent, and 3) a curing agent and / or reinforcing fibers and so on, may be sold as a kit. For example, an end user may use the kit for work by mixing the above 1) and the above 2), and then adding 3) on job site at a time of use (a time of curing).

Sale as such a kit makes it possible to prevent end users from utilizing the present invention after storing 1) and 2) in a mixed state over a long period of time. That is, as will be clarified by the Examples to be described later, if the resin (a) of the above 1) and the organic tin compound component (b) of the above 2) are left in a mixed state, gelation time will be shortened, and there is a possibility that the shortened gelation time will influence an amount of working time. In order to avoid such an issue, it is favorable or the above 1) and the above 2) not to be unintentionally left in a mixed state before use. The kit of the present invention is advantageous in the point that it enables this problem to be easily avoided.

The present inventors discovered that as a principle, gelation time basically starts to linearly become shorter from immediately after the above 1) and the above 2) are mixed. Although it depends on the composition of the resin and the like, there is a possibility that a mixture which has an initial gelation time of approximately 60 minutes will have a gelation time of 20 to 30 minutes 12 hours later. In addition, there is a possibility that a mixture which has an initial gelation time of approximately 90 minutes will have a gelation time of 40 to 60 minutes 12 hours later. Commonly, an amount of working time can be secured if a gelation time is 30 minutes or longer. Therefore, although it depends on the composition of the resin and the like, it can be most preferable for the above 1) and the above 2) to be mixed immediately prior to curing being initiated only as a guide. In the case that it is difficult for the above 1) and the above 2) to be mixed immediately prior to curing being initiated, the above 1) and the above 2) may be mixed 12 hours prior to the time that curing is initiated and thereafter, and preferably may be mixed between a time period from six hours prior to the time that curing is initiated up to the time that curing is initiated.

Moreover, in the case that there is no problem with a short amount of working time, after the above 1) and the above 2) are mixed, the amount of time until the curing agent of the above 3) is added may possibly be longer than 12 hours.

### Example

Hereinafter, the present invention will be described more specifically with reference to Examples. The present invention is not limited to the following Examples. In the Examples, "parts" refers to parts by weight unless particularly noted otherwise. The amounts of isocyanate group content in the synthesis examples were measured by dissolving each of the resins in dry toluene, causing reactions by adding excess di-n-butylamine solution, and back titrating the remaining di-n-butylamine with hydrochloric acid.

### [Synthesis Example 1]

### <Synthesis of Urethane (Meth) Acrylate Resin (a1)>

392 parts of isophorone diisocyanate (by Evonik, Ltd.), 210 parts of a styrene monomer, 0.016 parts of dibutyl tin dilaurate, 75 parts of 1,3-propanediol (by DuPont, Ltd.), 162 parts of 2-hydroxyethyl methacrylate (by Mitsubishi Gas Chemical Co., Ltd.), 0.06 parts of toluhydroquinone, and 0.25 parts of 4-methyl-2,6-di-tert-butylphenol were charged into a reaction vessel equipped with a gas inlet tube, a stirring device, a cooling tube, and a thermometer. Reactions were caused by applying heat to maintain the temperature within a range from 95°C to 105°C while stirring and introducing air into the reaction vessel. The reactions were tracked by IR, and a point at which absorption of isocyanate groups (in the vicinity of 2270 m⁻¹) became constant was designated as the endpoint. The reactions required three hours. The amount of isocyanate group content in the urethane (meth) acrylate was 2.08 percent by weight, and equivalent weight of ethylene unsaturated groups was 505 g/eq. Thereafter, the mixture was diluted with 160 parts of the styrene monomer, to obtain a urethane (meth) acrylate resin (a1) that contains isocyanate groups at 1.17 percent by weight.

### [Synthesis Example 2]

### <Synthesis of Urethane (Meth) Acrylate Resin (a2)>

314 parts of a trimer of isophorone diisocyanate (by Evonik, Ltd.) and 307 parts of a styrene monomer were charged into the same reaction vessel as that employed for Synthesis Example 1. Reactions were caused by applying heat to a temperature of 60°C while stirring and introducing air into the reaction vessel. Thereafter, 0.014 parts of dibutyl tin dilaurate, 163 parts pentaerythritol triacrylate (by Toagosei Co., Ltd.), 93 parts of 2-hydroxyethyl methacrylate (by Mitsubishi Gas Chemical Co., Ltd.), 0.06 parts of toluhydroquinone, and 0.20 parts of 4-methyl-2,6-di-tert-butylphenol were charged separately into the reaction vessel. Reactions were caused by applying heat to maintain the temperature within a range from 95°C to 105°C. The reactions were tracked by IR, and a point at which absorption of isocyanate groups (in the vicinity of 2270 m⁻¹) became constant was designated as the endpoint. The reactions required three hours. The amount of isocyanate group content in the urethane (meth) acrylate was 2.00 percent by weight, and equivalent weight of ethylene unsaturated groups was 423g/eq. Thereafter, the mixture was diluted with 0.15 parts of phenothiazine and 123 parts of the styrene monomer, to obtain a urethane (meth) acrylate resin (a2) that contains isocyanate groups at 1.14 percent by weight.

### <Evaluation of Storage Stability>

The resins obtained by the Synthesis Examples above were employed to measure gelation times and viscosities. Measurements were conducted in compliance with JISK6901.

### [Example 0-1]

The initial viscosity of the urethane (meth) acrylate resin (a1) obtained in the Synthesis Example 1 was measured. The measured viscosity was 102 mPa·s. Next, 0.04 parts of dibutyl tin dilaurate and 0.46 parts of 6% cobalt naphthenate were added to 100 parts of (a1), and 1 part of 328E (by Kayaku Akzo) was added as a curing agent, and an initial gelation time was measured. The measured gelation time was 40 minutes.

### [Example 0-2]

The initial viscosity of the urethane (meth) acrylate resin (a2) obtained in the Synthesis Example 2 was measured. The measured viscosity was 121 mPa·s. Next, 0.04 parts of dibutyl tin dilaurate and 0.46 parts of 6% cobalt naphthenate were added to 100 parts of (a2), and 1 part of 328E (by Kayaku Akzo) was added as a curing agent, and an initial gelation time was measured. The measured gelation time was 45 minutes.

### [Example 1-1]

The urethane (meth) acrylate resin (a1) obtained in the Synthesis Example 1 was stored for 30 days at 25°C. The viscosity was measured after storage, and the measured viscosity was 112 mPa·s. Next, 0.04 parts of dibutyl tin dilaurate and 0.46 parts of 6% cobalt naphthenate were added to 100 parts of (a1), and 1 part of 328E (by Kayaku Akzo) was added as a curing agent to the obtained radical polymerizable resin composition, and the gelation time was measured. The measured gelation time was 36 minutes.

### [Example 1-2]

The urethane (meth) acrylate resin (a2) obtained in the Synthesis Example 2 was stored for 30 days at 25°C. The viscosity was measured after storage, and the measured viscosity was 138 mPa·s. Next, 0.04 parts of dibutyl tin dilaurate and 0.46 parts of 6% cobalt naphthenate were added to 100 parts of (a2), and 1 part of 328E (by Kayaku Akzo) was added as a curing agent to the obtained radical polymerizable resin composition, and the gelation time was measured. The measured gelation time was 38 minutes.

### [Reference Example 1-1]

Immediately after synthesis, 0.04 parts of dibutyl tin dilaurate were mixed with the urethane (meth) acrylate resin (a1) obtained in the Synthesis Example 1, and the mixture was stored for 30 days at 25°C. The viscosity was measured after storage, and the measured viscosity was 213 mPa·s. Next, 0.46 parts of 6% cobalt naphthenate were added to 100 parts of (a1), and 1 part of 328E (by Kayaku Akzo) was added as a curing agent to the obtained radical polymerizable resin composition, and the gelation time was measured. The measured gelation time was 13 minutes.

### [Reference Example 1-2]

Immediately after synthesis, 0.04 parts of dibutyl tin dilaurate were mixed with the urethane (meth) acrylate resin (a2) obtained in the Synthesis Example 2, and the mixture was stored for 30 days at 25°C. The viscosity was measured after storage, and the measured viscosity was 192 mPa·s. Next, 0.46 parts of 6% cobalt naphthenate were added to 100 parts of (a2), and 1 part of 328E (by Kayaku Akzo) was added as a curing agent to the obtained radical polymerizable resin composition, and the gelation time was measured. The measured gelation time was 12 minutes.

### [Evaluation]

The measurement results are shown in Table 1. First, with respect to viscosity, the viscosities at the time of curing are indicated as multiple factors that represent the degrees of increase in viscosity with respect to the viscosities of the urethane (meth) acrylates immediately after synthesis.

After storage, Both of the radical polymerizable resin compositions of Example 1-1 and Example 1-2 wherein the urethane (meth) acrylate resins were mixed with the dibutyl tin dilaurate (hereinafter, DBTDL) at the time of curing, had the degree of increase in viscosity of 1.1 times greater than the initial viscosities measured for Example 0-1 and Example 0-2. In contrast, the radical polymerizable resin compositions of Reference Example 1-1 and Reference Example 1-2, which were the urethane (meth) acrylate resins mixed with the dibutyl tin dilaurate (hereinafter, DBTDL) immediately after synthesis, respectively had degrees of increase in viscosity of 2.1 and 1.6 times greater than the initial viscosities measured for Example 0-1 and Example 0-2, which indicate that storage stability had decreased. Room temperature thick article RTM often utilizes resin at a viscosity within a range from 50 mPa s to 150 mPa·s, and there is a possibility that the resin compositions obtained in the Reference Examples will cause impregnation defects.

Next, with respect to gelation time, the gelation times at the time of curing were shown as retention rates in percentage with respect to the gelation times of the urethane (meth) acrylate resins immediately after synthesis.

After storage, the radical polymerizable resin compositions of Example 1-1 and Example 1-2 wherein the urethane (meth) acrylate resins were mixed with the DBTDL at the time of curing, respectively had retention rates of 90% and 84% compared to the initial gelation times measured for Example 0-1 and Example 0-2. In contrast, the radical polymerizable resin compositions of Reference Example 1-1 and Reference Example 1-2, wherein the urethane (meth) acrylate resins were mixed with the DBTDL immediately after synthesis, respectively had retention rates of 33% and 27%, which indicate that storage stability had been significantly decreased. Gelation time influences workability, and therefore it is desired for gelation time to remain unchanged as much as possible. However, the resin compositions which were obtained in the Reference Examples will impose great restrictions on working times.

**[Table 1]**

| | | | Examples | | Reference Examples | |
|---|---|---|---|---|---|---|
| | | | 1-1 | 1-2 | 1-1 | 1-2 |
| Urethane (Meth) Acrylate Resin | Resin Species | | a1 | a2 | a1 | a2 |
| | Amount used | parts | 100 | 100 | 100 | 100 |
| DBDTDL | Timing of Addition | | Time of Curing | Time of Curing | Immediately After Synthesis | Immediately After Synthesis |
| | Amount added | parts | 0.04 | 0.04 | 0.04 | 0.04 |
| Total Tin Content in Radical Polymerizable Resin Composition | | ppm | 78 | 78 | 78 | 78 |
| Viscosity | Initial Viscosity | mPa·s | 102 | 121 | 102 | 121 |
| | At Time of Curing | | 112 | 138 | 213 | 192 |
| | Degree of Increase | Times | 1.1 | 1.1 | 2.1 | 1.6 |
| Gelation Time | Initial Gelation Time | Minutes | 40 | 45 | 40 | 45 |
| | At Time of Curing | | 36 | 38 | 13 | 12 |
| | Retention Rate | % | 90 | 84 | 33 | 27 |

### <Evaluation of Mechanical Properties>

The resins which were obtained in the synthesis examples above were employed to produce laminated plates under the following conditions, and the mechanical properties thereof were measured. Measurements of tensile strength, bending strength, compressive strength, and interlayer shear strength were respectively conducted in compliance with JISK7161, JISK7074, JISK 7018, and JISK7078.

### <Laminated Plate Production Conditions>

- Examples 2-1, 2-2, 2-3 and Reference Examples 2-1, 2-2
   Carbon Fiber: plain woven cloth (trade name "T-6343" by Toray Industries, Inc.)
   Laminate Structure: eight 25 cm by 25 cm sheets having a thickness of 2mm and a carbon fiber content of 40 Vf (volume) %
   Curing Conditions: six hours at room temperature (23°C), two hours at 80°C, then two hours at 100°C
- Example 2-4 and Reference Example 2-3
   Carbon Fiber: plain woven cloth (trade name "T-6343" by Toray Industries, Inc.)
   Laminate Structure: ten 25 cm by 25 cm sheets having a thickness of 2mm and a carbon fiber content of 47 Vf (volume) %
   Curing Conditions: five minutes at 110°C under a pressure of 8 MPa

### [Example 2-1]

To 100 parts of the urethane (meth) acrylate resin (a1) obtained in the Synthesis Example 1, 0.02 parts of dibutyl tin dilaurate and 0.48 parts of 6% cobalt naphthenate were added. 1 part of 328E (by Kayaku Akzo) as a curing agent was blended into the obtained radical polymerizable resin composition, the composition was impregnated into carbon fibers, molded by hand layup molding, and then cured. After that the mechanical properties of the obtained laminated plate were measured.

### [Example 2-2]

To 100 parts of the urethane (meth) acrylate resin (a1) obtained in the Synthesis Example 1, 0.01 parts of dibutyl tin dilaurate and 0.49 parts of 6% cobalt naphthenate were added. 1 part of 328E (by Kayaku Akzo) as a curing agent was blended into the obtained radical polymerizable resin composition, the composition was impregnated into carbon fibers, molded by hand layup molding, and then cured. After that, the mechanical properties of the obtained laminated plate were measured.

### [Example 2-3]

To 100 parts of the urethane (meth) acrylate resin (a2) obtained in the Synthesis Example 2, 0.02 parts of dibutyl tin dilaurate and 0.48 parts of 6% cobalt naphthenate were added. 1 part of 328E (by Kayaku Akzo) as a curing agent was blended into the obtained radical polymerizable resin composition, the composition was impregnated into carbon fibers, molded by hand layup molding, and then cured. After that, the mechanical properties of the obtained laminated plate were measured.

### [Example 2-4]

To 100 parts of the urethane (meth) acrylate resin (a1) obtained in the Synthesis Example 1, 0.2 parts of a 10% dibutyl tin dilaurate styrene solution and 1 part of benzoyl peroxide were added. The composition was impregnated into carbon fibers, cured under pressure for five minutes in a die at 110°C, and then the mechanical properties of the obtained laminated plate were measured.

### [Reference Example 2-1]

To 100 parts of the urethane (meth) acrylate resin (a1) obtained in the Synthesis Example 1, 0.5 parts of 6% cobalt naphthenate were added. 1 part of 328E (by Kayaku Akzo) as a curing agent was blended into the obtained radical polymerizable resin composition, the composition was impregnated into carbon fibers, molded by hand layup molding, and then cured. After that, the mechanical properties of the obtained laminated plate were measured.

### [Reference Example 2-1]

To 100 parts of the urethane (meth) acrylate resin (a2) obtained in the Synthesis Example 2, 0.5 parts of 6% cobalt naphthenate were added. 1 part of 328E (by Kayaku Akzo) as a curing agent was blended into the obtained radical polymerizable resin composition, the composition was impregnated into carbon fibers, molded by hand layup molding, and then cured. After that, the mechanical properties of the obtained laminated plate were measured.

1 part of benzoyl peroxide was added to 100 parts of the urethane (meth) acrylate resin (a1) obtained in the Synthesis Example 1. The composition was impregnated into carbon fibers, cured under pressure for five minutes in a die at 110°C, and then the mechanical properties of the obtained laminated plate were measured.

### [Evaluation]

The measurement results are shown in Table 2.

**[Table 2]**

| | | | Examples | | | | Reference Examples | | |
|---|---|---|---|---|---|---|---|---|---|
| | | | 2-1 | 2-2 | 2-3 | 2-4 | 2-1 | 2-2 | 2-3 |
| Urethane (Meth) Acrylate Resin | Resin Species | | a1 | a1 | a2 | a1 | a1 | a2 | a1 |
| | Amount used | parts | 100 | 100 | 100 | 100 | 100 | 100 | 10 |
| DBTDL | Timing of Addition | | Time of Curing | Time of Curing | Time of Curing | Time of Curing | Time of Curing | Time of Curing | Time of Curing |
| | Amount added | parts | 0.04 | 0.01 | 0.04 | 0.04 | 0 | 0 | 0 |
| Promoting Agent | | parts | 0.5 | 0.5 | 0.5 | 0.5 | 0.5 | 0.5 | 0.5 |
| Curing Agent | | parts | 1.0 | 1.0 | 1.0 | 1.0 | 1.0 | 1.0 | 1.0 |
| Total Tin Content in Radical Polymerizable Resin Composition | | ppm | 78 | 22 | 78 | 78 | 3 | 3 | 3 |
| Mechanical Properties | Bending Strength | MPa | 838 | 818 | 780 | 961 | 756 | 652 | 792 |
| | Compressive Strength | MPa | 524 | 509 | 448 | 497 | 448 | 338 | 407 |
| | Interlayer Shear Strength | MPa | 74 | 72 | 54 | 65 | 62 | 39 | 56 |

### <Evaluation of Actual Molded Article>

A partitioning plate (a 2.5 m by 5 m CFRP plate) which is utilized in transport equipment was employed as an example of a molded article. The maximum load which is applied to the partitioning plate is 600N. However, taking a margin of safety of 30% into consideration, the necessary load resistance will be 857 MPa. Molded plates were produced at thicknesses calculated from the bending strengths of CFRP plates to be utilized, and bending tests were conducted.

### [Example 3]

To 250 parts of the urethane (meth) acrylate resin (a1) obtained in the Synthesis Example 1, 0.1 parts of dibutyl tin dilaurate and 1.15 parts of 6% cobalt naphthenate were added and stirred. After stirring, 2.50 parts of 328E (by Kayaku Akzo) was added as a curing agent, and then mixed by stirring. The mixture and carbon fibers CO6343 (plain woven cloth by Toray Industries, Inc.) were employed to produce a CFRP plate having a thickness of 2.84 mm by hand layup molding. As curing, room temperature curing was conducted for three hours and then post-curing for two hours at 100°C.

### [Reference Example 3-1]

65 parts of an amine series curing agent were added to 215 parts of a bisphenol series epoxy resin in liquid form and mixed by stirring. The mixture and carbon fibers CO6343 (plain woven cloth by Toray Industries, Inc.) were employed to produce a CFRP plate having a thickness of 3.17 mm by hand layup molding. As curing, room temperature curing was conducted for six hours and then post-curing for two hours at 150°C.

### [Reference Example 3-2]

To 280 parts of an unsaturated polyester resin (8250L by Japan U-Pica Co., Ltd.), 1.4 parts of 6% cobalt naphthenate were added, and 2.80 parts of 328E (Kayaku Akzo) were added as a curing agent and mixed by stirring. The mixture and carbon fibers CO6343 (plain woven cloth by Toray Industries, Inc.) were employed to produce a CFRP plate having a thickness of 3.19 mm by hand layup molding. As curing, room temperature curing was conducted for three hours and then post-curing for two hours at 100°C.

### [Reference Example 3-3]

To 300 parts of an unsaturated polyester resin (U-Pica 4007A by Japan U-Pica Co., Ltd.), 1.5 parts of 6% cobalt naphthenate were added and stirred, and then 3.00 parts of Permek N (NOF Corp.) were added as a curing agent and mixed by stirring. The mixture and carbon fibers CO6343 (plain woven cloth by Toray Industries, Inc.) were employed to produce a CFRP plate having a thickness of 3.63 mm by hand layup molding. As curing, room temperature curing was conducted for three hours and then post-curing for two hours at 100°C.

**[Table 3]**

| | | Example 3 | Reference Example 3-1 | Reference Example 3-2 | Reference Example 3-3 |
|---|---|---|---|---|---|
| Bending Strength (MPa) of CFRP | | 850 | 700 | 680 | 530 |
| Necessary Load Resistance | Load (N) | 857 | 857 | 857 | 857 |
| | Practical 600N / 30% | | | | |
| | Increase for Safety Margin | | | | |
| Actual Molded Article | Actual Molded Thickness (mm) | 2.84 | 3.17 | 3.19 | 3.63 |
| | Maximum Load (N) at Breakage in Bending Test | 870 | 868 | 867 | 859 |
| | Relative Density of CFRP | 1.40 | 1.41 | 1.40 | 1.40 |
| | Weight of 2.5m by 5m Board (kg) | 29.82 | 33.52 | 33.50 | 38.12 |
| | Relative Weight Value in the case that Example 3 is designated as 100 | 100 | 112 | 112 | 129 |

The bending tests of the actual molded articles were conducted with a distance of 80 mm between pivot points. The molded plates of the Examples and the Comparative Examples all had loads at breakage in the bending tests of greater than 857 MPa, and had values according to their designs.

As can be understood from Table 3, the actual molded article of Example 3 is approximately 11% lighter in weight than the molded plates of Reference Examples 3-1 and 3-2, and approximately 22% lighter than Reference Example 3-3. It is clear that molded articles can be designed to be thinner with respect to required strengths if the resin of the present invention is utilized as a matrix for CFRP, because the strength of the resin of the present invention is high.

## Claims

1. A fiber reinforced plastic molded article obtained by molding a fiber reinforced plastic molding material comprising a radical polymerizable resin composition and reinforcing fibers, wherein the radical polymerizable resin composition contains:
(a) at least a urethane (meth) acrylate resin component containing a urethane (meth) acrylate resin compound represented by the following chemical formula [Chemical 1]: 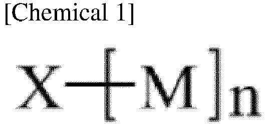 in the formula, wherein n is within a range from 2 to 100, X is a compound residue having two or more isocyanate groups, and M contains at least formula [Chemical 2]:
[Chemical 2] -N=C=0
and M other than the above formula [Chemical 2] is a formula [Chemical 3]: 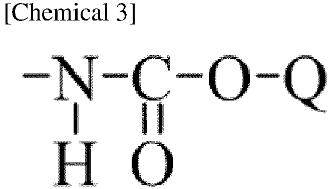
in the formula [Chemical 3], Q represents a residue of a hydroxyl group containing (meth)acrylate esters;
wherein the component (a) contains 0.1 to 12 percent by weight of isocyanate groups,
wherein the urethane (meth) acrylate compound is synthesized in the presence of a tin compound catalyst and the amount of the tin compound catalyst is 5 to 100 ppm with respect to the loading weight, and
(b) an organic tin compound component
and the component (a) and the component (b) are mixed prior to curing.

2. A fiber reinforced plastic molded article according to claim 1, wherein the chemical formula [Chemical 1] is represented by the following chemical formula [Chemical 4]: 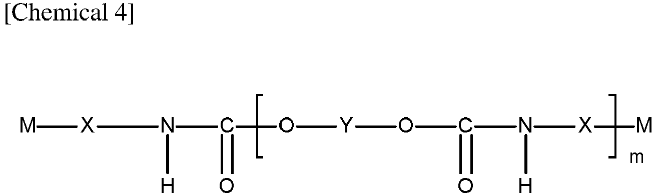 in the formula, wherein m is within a range from 1 to 5000, X is a compound residue having two or more isocyanate groups, Y is an alcohol compound residue having two or more hydroxyl groups and M contains at least formula [Chemical 5]:
[Chemical 5] -N=C=O
and the M other than the above formula [Chemical 5] is formula [Chemical 6]: 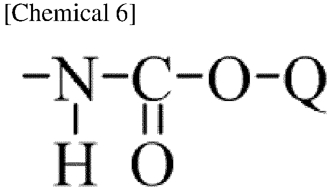 Moreover, in the formula [Chemical 6], Q represents a residue of a hydroxyl group containing (meth)acrylate esters.

3. A fiber reinforced plastic molded article according to any one of claims 1 to 2, wherein the reinforcing fibers are one or more selected from a group consisting of carbon fibers, glass fibers, basalt fibers, aramid fibers, polyarylate fibers, and cellulose fibers.

4. A fiber reinforced plastic molded article according to any one of claims 1 to 3, wherein the fiber reinforced plastic molded article is utilized as structural members, non-structural members, external members, internal members, or parts thereof in the fields of aviation and aerospace, the fields of sports and daily consumer goods, and the industrial field.

5. A method of manufacturing a fiber reinforced plastic molded article **characterized by** comprising a step of mixing:
(a) a urethane (meth) acrylate resin component containing at least a urethane (meth) acrylate compound represented by the following chemical formula [Chemical 7]: 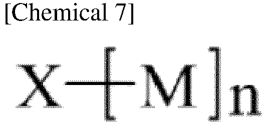 in the formula, wherein n is within a range from 2 to 100, X is a compound residue having two or more isocyanate groups, and M at least contains formula [Chemical 8]:
[Chemical 8] -N=C=O
and M other than the above formula [Chemical 8] is formula [Chemical 9]: 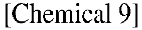 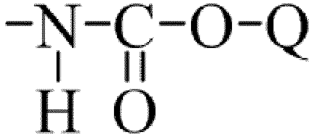
Further, in the formula [Chemical 9], Q represents a residue of a hydroxyl group containing (meth)acrylate esters;
wherein the component (a) contains 0.1 to 12 percent by weight of isocyanate groups,
wherein the urethane (meth) acrylate compound is synthesized under the tin compound catalyst, and the amount of the tin compound catalyst is 5 to 100 ppm with respect to the loading weight, and,
(b) an organic tin compound component, prior to the radical polymerizable resin composition at least containing the component (a) and the component (b) being cured, wherein room temperature curing and post-curing are conducted as curing.

6. A method of manufacturing a fiber reinforced plastic molded article according to claim 5, wherein the time prior to the radical polymerizable resin composition being cured is a period of time from six hours before curing is initiated to a time when curing is initiated.

7. A kit for a fiber reinforced plastic molded article obtained by molding a fiber reinforced plastic molding material comprising a radical polymerizable resin composition and reinforcing fibers, wherein the radical polymerizable resin composition contains:
(a) at least a urethane (meth) acrylate resin component containing a urethane (meth) acrylate compound represented by the following chemical formula [Chemical 10]: 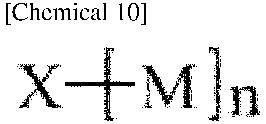 in the formula, wherein n is within a range from 2 to 100, X is a compound residue having two or more isocyanate groups, and M at least contains formula [Chemical 11]:
[Chemical 11] -N=C=O
and M other than the above formula [Chemical 11] is formula [Chemical 12] : 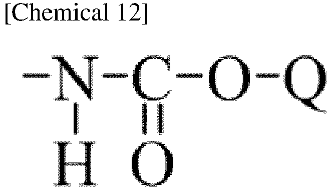
Moreover, in the formula [Chemical 12], Q represents a residue of a hydroxyl group containing (meth)acrylate esters;
wherein the component (a) contains 0.1 to 12 percent by weight of isocyanate groups,
wherein the urethane (meth) acrylate compound is synthesized under the tin compound catalyst, and the amount of the tin compound catalyst is 5 to 100 ppm with respect to the loading weight,
(b) an organic tin compound component and, the kit contains at least the component (a) and the component (b).

## Patentansprüche

1. Faserverstärkter Kunststoff-Formartikel, erhalten durch Formen eines faserverstärkten Kunststoff-Formmaterials, das eine radikalisch polymerisierbare Harzzusammensetzung und Verstärkungsfasern umfasst, wobei die radikalisch polymerisierbare Harzzusammensetzung enthält:
(a) mindestens eine Urethan(meth)acrylatharzkomponente, die eine Urethan(meth)acrylatharzverbindung enthält, dargestellt durch die folgende chemische Formel [Chemikalie 1]: 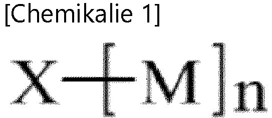 wobei in der Formel n in einem Bereich von 2 bis 100 liegt, X ein Verbindungsrest ist, der zwei oder mehr Isocyanatgruppen aufweist, und M mindestens die Formel [Chemikalie 2] enthält:
[Chemikalie 2] -N=C=O
und M anders als die obige Formel [Chemikalie 2] eine Formel [Chemikalie 3] ist: 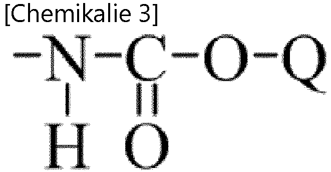
in der Formel [Chemikalie 3] stellt Q einen Rest einer Hydroxylgruppe dar, der (Meth)acrylatester enthält;
wobei die Komponente (a) 0,1 bis 12 Gewichtsprozent an Isocyanatgruppen enthält, wobei die Urethan(meth)acrylatverbindung in Gegenwart eines Zinnverbindungskatalysators synthetisiert wird und die Menge des Zinnverbindungskatalysators 5 bis 100 ppm, bezogen auf das Beladungsgewicht, beträgt, und
(b) eine organische Zinnverbindungskomponente
und die Komponente (a) und die Komponente (b) werden vor dem Aushärten gemischt.

2. Faserverstärkter Kunststoff-Formartikel gemäß Anspruch 1, wobei die chemische Formel [Chemikalie 1] durch die folgende chemische Formel [Chemikalie 4] dargestellt wird: 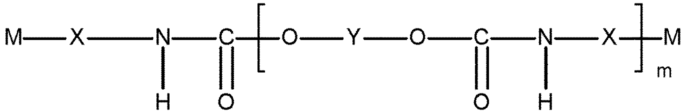 wobei in der Formel n in einem Bereich von 1 bis 5000 liegt, X ein Verbindungsrest ist, der zwei oder mehr Isocyanatgruppen aufweist, Y ein Alkoholverbindungsrest ist, der zwei oder mehr Hydroxylgruppen aufweist, und M mindestens die Formel [Chemikalie 5] enthält:
[Chemikalie 5] -N=C=O
und M anders als die obige Formel [Chemikalie 5] eine Formel [Chemikalie 6] ist: 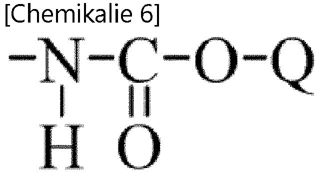 Darüber hinaus stellt Q in der Formel [Chemikalie 6] einen Rest einer Hydroxylgruppe dar, der (Meth)acrylatester enthält.

3. Faserverstärkter Kunststoff-Formartikel gemäß einem der Ansprüche 1 bis 2, wobei die Verstärkungsfasern eines oder mehrere sind, ausgewählt aus einer Gruppe bestehend aus Kohlenstofffasern, Glasfasern, Basaltfasern, Aramidfasern, Polyarylatfasern, und Zellulosefasern.

4. Faserverstärkter Kunststoff-Formartikel gemäß einem der Ansprüche 1 bis 3, wobei der faserverstärkte Kunststoff-Formartikel als Strukturelemente, Nicht-Strukturelemente, äußere Elemente, innere Elemente, oder Teilen davon in den Bereichen Luft- und Raumfahrt, den Bereichen Sport und Konsumgüter des täglichen Bedarfs, und im industriellen Bereich verwendet wird.

5. Verfahren zur Herstellung eines faserverstärkten Kunststoff-Formartikels, **dadurch gekennzeichnet, dass** es einen Schritt des Mischens umfasst:
(a) einer Urethan(meth)acrylatharzkomponente, die mindestens eine Urethan(meth)acrylatverbindung enthält, dargestellt durch die folgende chemische Formel [Chemikalie 7]: 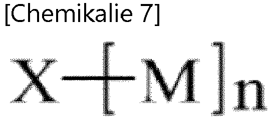 wobei in der Formel n in einem Bereich von 2 bis 100 liegt, X ein Verbindungsrest ist, der zwei oder mehr Isocyanatgruppen aufweist, und M mindestens die Formel [Chemikalie 8] enthält:
[Chemikalie 8] -N=C=O
und M anders als die obige Formel [Chemikalie 8] eine Formel [Chemikalie 9] ist: 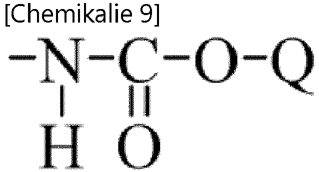
Ferner stellt Q in der Formel [Chemikalie 9] einen Rest einer Hydroxylgruppe dar, der (Meth)acrylatester enthält;
wobei die Komponente (a) 0,1 bis 12 Gewichtsprozent an Isocyanatgruppen enthält,
wobei die Urethan(meth)acrylatverbindung unter dem Zinnverbindungskatalysator synthetisiert wird, und die Menge des Zinnverbindungskatalysators 5 bis 100 ppm, bezogen auf das Beladungsgewicht, beträgt, und,
(b) einer organischen Zinnverbindungskomponente, bevor die radikalisch polymerisierbare Harzzusammensetzung, die mindestens die Komponente (a) und die Komponente (b) enthält, ausgehärtet wird, wobei Härten bei Raumtemperatur und Nachhärten als Aushärten durchgeführt werden.

6. Verfahren zur Herstellung eines faserverstärkten Kunststoff-Formartikels gemäß Anspruch 5, wobei die Zeit vor der Aushärtung der radikalisch polymerisierbaren Harzzusammensetzung eine Zeitspanne von sechs Stunden vor dem Beginn der Aushärtung bis zu einem Zeitpunkt ist, an dem die Aushärtung eingeleitet wird.

7. Kit für einen faserverstärkten Kunststoff-Formartikel, der durch Formen eines faserverstärkten Kunststoff-Formmaterials, das eine radikalisch polymerisierbare Harzzusammensetzung und Verstärkungsfasern umfasst, erhalten wird, wobei die radikalisch polymerisierbare Harzzusammensetzung enthält:
(a) mindestens eine Urethan(meth)acrylatharzkomponente, die eine Urethan(meth)acrylatharzverbindung enthält, dargestellt durch die folgende chemische Formel [Chemikalie 10]: 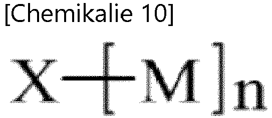 wobei in der Formel n in einem Bereich von 2 bis 100 liegt, X ein Verbindungsrest ist, der zwei oder mehr Isocyanatgruppen aufweist, und M mindestens die Formel [Chemikalie 11] enthält:
[Chemikalie 11] -N=C=0
und M anders als die obige Formel [Chemikalie 11] eine Formel [Chemikalie12] ist: 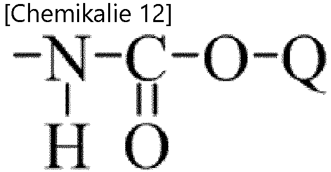
Darüber hinaus stellt Q in der Formel [Chemikalie 12] einen Rest einer Hydroxylgruppe dar, der (Meth)acrylatester enthält;
wobei die Komponente (a) 0,1 bis 12 Gewichtsprozent an Isocyanatgruppen enthält,
wobei die Urethan(meth)acrylatverbindung unter dem Zinnverbindungskatalysator synthetisiert wird, und die Menge des Zinnverbindungskatalysators 5 bis 100 ppm, bezogen auf das Beladungsgewicht, beträgt, und
(b) eine organische Zinnverbindungskomponente, und der Kit mindestens die Komponente (a) und die Komponente (b) enthält.

## Revendications

1. Article moulé en plastique renforcé par des fibres obtenu par moulage d'un matériau de moulage en plastique renforcé par des fibres comprenant une composition de résine polymérisable par voie radicalaire et des fibres de renforcement, la composition de résine polymérisable par voie radicalaire contenant :
(a) au moins un composant de résine de (méth)acrylate d'uréthane contenant un composé de résine de (méth) acrylate d'uréthane représenté par la formule chimique [Produit chimique 1] suivante : 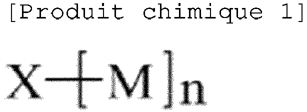 dans la formule, n étant compris dans une plage allant de 2 à 100, X étant un résidu de composé ayant deux groupes isocyanate ou plus, et M contenant au moins la formule [Produit chimique 2] :
[Produit chimique 2] -N=C=O
et M autre que la formule [Produit chimique 2] ci-dessus est une formule [Produit chimique 3] : 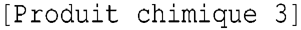 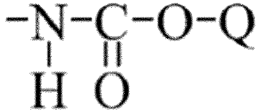
dans la formule [Produit chimique 3], Q représente un résidu d'un groupe hydroxyle contenant des esters de (méth)acrylate ;
le composant (a) contenant de 0,1 à 12 pour cent en poids de groupes isocyanate,
le composé de (méth)acrylate d'uréthane étant synthétisé en présence d'un catalyseur de composé d'étain et la quantité du catalyseur de composé d'étain étant de 5 à 100 ppm par rapport au poids de chargement, et
(b) un composant de composé d'étain organique
et le composant (a) et le composant (b) sont mélangés précédemment au durcissement.

2. Article moulé en plastique renforcé par des fibres selon la revendication 1, dans lequel la formule chimique [Produit chimique 1] est représentée par la formule chimique [Produit chimique 4] suivante : 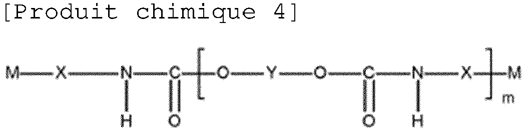 dans la formule, m étant compris dans une plage allant de 1 à 5 000, X étant un résidu de composé ayant deux groupes isocyanate ou plus, Y étant un résidu de composé d'alcool ayant deux groupes hydroxyle ou plus et M contenant au moins la formule [Produit chimique 5] :
[Produit chimique 5] -N=C=O
et le M autre que la formule [Produit chimique 5] ci-dessus est de formule [Produit chimique 6] : 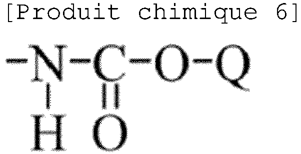 De plus, dans la formule [Produit chimique 6], Q représente un résidu d'un groupe hydroxyle contenant des esters de (méth)acrylate.

3. Article moulé en plastique renforcé par des fibres selon l'une quelconque des revendications 1 à 2, dans lequel les fibres de renforcement sont une ou plusieurs fibres sélectionnées dans un groupe constitué de fibres de carbone, fibres de verre, fibres de basalte, fibres d'aramide, fibres de polyarylate, et fibres de cellulose.

4. Article moulé en plastique renforcé par des fibres selon l'une quelconque des revendications 1 à 3, l'article moulé en plastique renforcé par des fibres étant utilisé en tant qu'éléments structuraux, éléments non structuraux, éléments externes, éléments internes, ou parties de ceux-ci dans les domaines de l'aviation et de l'aérospatiale, les domaines des biens de sport et des biens de consommation quotidienne, et le domaine industriel.

5. Procédé de fabrication d'un article moulé en plastique renforcé par des fibres **caractérisé en ce qu'**il comprend une étape consistant à mélanger :
(a) un composant de résine de (méth)acrylate d'uréthane contenant au moins un composé de résine de (méth)acrylate d'uréthane représenté par la formule chimique [Produit chimique 7] suivante : 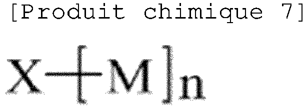 dans la formule, n étant compris dans une plage allant de 2 à 100, X étant un résidu de composé ayant deux groupes isocyanate ou plus, et M contenant au moins la formule [Produit chimique 8] :
[Produit chimique 8] -N=C=O
et M autre que la formule [Produit chimique 8] ci-dessus est de formule [Produit chimique 9] : 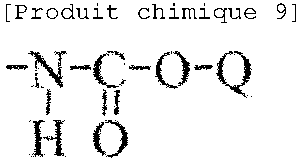
En outre, dans la formule [Produit chimique 9], Q représente un résidu d'un groupe hydroxyle contenant des esters de (méth)acrylate ;
le composant (a) contenant de 0,1 à 12 pour cent en poids de groupes isocyanate,
le composé de (méth)acrylate d'uréthane étant synthétisé sous le catalyseur de composé d'étain, et la quantité du catalyseur de composé d'étain étant de 5 à 100 ppm par rapport au poids de chargement, et,
(b) un composant composé d'étain organique, précédent le durcissement de la composition de résine polymérisable par voie radicalaire contenant au moins le composant (a) et du composant (b), dans lequel le durcissement à température ambiante et le post-durcissement sont réalisés en tant que durcissement.

6. Procédé de fabrication d'un article moulé en plastique renforcé par des fibres selon la revendication 5, dans lequel le temps précédent le durcissement de la composition de résine polymérisable par voie radicalaire est une période de temps allant de six heures avant que le durcissement ne soit lancé à un moment où le durcissement est lancé.

7. Kit pour un article moulé en plastique renforcé par des fibres obtenu par moulage d'un matériau de moulage en plastique renforcé par des fibres comprenant une composition de résine polymérisable par voie radicalaire et des fibres de renforcement, la composition de résine polymérisable par voie radicalaire contenant :
(a) au moins un composant de résine de (méth)acrylate d'uréthane contenant un composé de (méth) acrylate d'uréthane représenté par la formule chimique [Produit chimique 10] suivante : 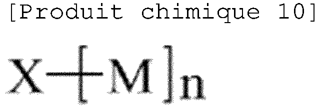 dans la formule, n étant dans une plage allant de 2 à 100, X étant un résidu de composé ayant deux groupes isocyanate ou plus, et M contenant au moins la formule [Produit chimique 11] :
[Produit chimique 11] -N=C=O
et M autre que la formule [Produit chimique 11] ci-dessus est de formule [Produit chimique 12] : 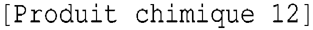 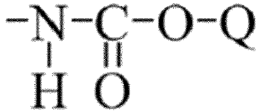
De plus, dans la formule [Produit chimique 12], Q représente un résidu d'un groupe hydroxyle contenant des esters de (méth)acrylate ;
le composant (a) contenant de 0,1 à 12 pour cent en poids de groupes isocyanate,
le composé de (méth)acrylate d'uréthane étant synthétisé sous le catalyseur de composé d'étain, et la quantité du catalyseur de composé d'étain étant de 5 à 100 ppm par rapport au poids de chargement,
(b) un composant composé d'étain organique et, le kit contient au moins le composant (a) et le composant (b).
